# EUROPÄISCHE PATENTANMELDUNG

(11) **EP 2 712 695 A1**
(43) Veröffentlichungstag der Anmeldung: **02.04.2014**
(21) Anmeldenummer: 13004653.5
(22) Anmeldetag: 25.09.2013
(51) Int. Cl.: B23K 11/11, B23K 11/18, B23K 11/30, B23K 35/02

(54) **Schweißelektrode, insbesondere zum Aluminiumschweißen**

(30) Priorität: 28.09.2012 DE 202012009321 U
(71) Anmelder: Contico W-tec Automatisierungstechnik GmbH, 85748 Garching (DE)
(72) Erfinder: Koch, Walter, 26817 Rhauderfehn (DE)
(74) Vertreter: Heiland, Karsten

(57) **Zusammenfassung**

Die Erfindung betrifft eine Schweißelektrode (11), insbesondere zum Aluminiumschweißen, mit einer Kontaktfläche zum Anpressen an zu verschweißende Werkstoffe, wobei die Kontaktfläche eine oder mehrere Vertiefungen (16, 17) aufweist. In der Kontaktfläche ist zumindest eine Vertiefung (16, 17) vorgesehen, welche sich auch im Bereich eines äußeren umlaufenden Randes (12) der Kontaktfläche fortsetzt und so den umlaufenden Rand (12) unterbricht.

## Beschreibung

Die Erfindung betrifft eine Schweißelektrode, insbesondere zum Aluminiumschweißen gemäß dem Oberbegriff des Anspruchs 1. Daneben betrifft die Erfindung eine Vorrichtung zur Formgebung und/oder zur Bearbeitung von Schweißelektroden.

Widerstandsschweißungen werden in einer Vielzahl von Anwendungen im Bereich der Fertigungstechnik eingesetzt und dienen üblicherweise dazu, dünnwandige Metallteile oder dergleichen wie etwa Blechteile miteinander zu verbinden. Hierfür werden von Hand oder etwa auch von mechanisierten oder automatisierten Einrichtungen wie beispielsweise Schweißrobotern entsprechende Schweißzangen mit Schweißelektroden an die Verbindungsstellen der Werkstücke herangebracht und dort so miteinander auf Kontakt gefahren, dass die Werkstücke mindestens punktförmig aufeinander liegen. Durch den über die Schweißelektroden auf die Werkstücke aufgebrachten Schweißstrom wird das Material des Werkstückes punktuell sehr stark erhitzt und verschweißt bleibend miteinander.

Durch das Schweißverfahren kommt es unweigerlich dazu, dass die Schweißelektroden im Bereich der Berührung mit den Werkstücken im Laufe der Zeit eine Veränderung erfahren, und zwar eine Veränderung sowohl der Form als auch der Materialeigenschaften. Üblicherweise werden für Schweißelektroden im Bereich der Berührung mit dem Werkstück Materialien aus Kupfer und Kupferlegierungen benutzt, die beim Schweißen einem sogenannten Abbrand, also einer Abtragung von Material der Schweißelektroden im Bereich der Berührung mit dem Werkstück unterliegen. Ebenfalls werden die Oberflächen der Schweißelektroden im Bereich der Berührung mit dem Werkstück sich dadurch verändern, dass Material aus den Werkstücken oder durch die Verschweißung entstehender Rückstände, wie etwa Schlacken oder dergleichen, sich dort anlagern und auch dadurch die Geometrie der entsprechenden Oberflächen der Schweißelektroden verändern. Derartige Ablagerungen, die beim Schweißen entstehen und sich an der Schweißelektrode vornehmlich im Berührungsbereich ablagern, müssen aber periodisch entfernt werden. Denn für die Erzielung qualitativ hochwertige Schweißpunkte ist es wichtig, dass die Schweißelektroden besonders in ihrem Kontaktbereich, der mit dem zu schweißenden Werkstück in Berührung kommt; plan oder definiert geformt sind.

Im Bereich der Automobiltechnik oder sonstiger Fertigungsbereiche, in denen eine hohe Zahl von Schweißungen in kurzer Zeit durchgeführt werden muss, ist es von zentraler Bedeutung, dass die Schweißelektroden in ihrem Kontaktbereich möglichst immer identische Berührung mit den Werkstücken haben und dadurch gleichbleibende Schweißungen ausführen können. Durch die Veränderung der Schweißelektroden in ihrem Kontaktbereich, wie vorstehend beschrieben, wird aber unweigerlich eine Veränderung der Schweißungen einhergehen, die möglichst zu vermeiden ist. Dadurch ist es schon seit langem bekannt, anstelle von massiven Schweißzangen aus dem vorstehend genannten Material Schweißzangen zu verwenden, bei denen im Bereich der Berührung mit den Werkstücken Schweißelektroden nach Art von Kappen aufgesetzt sind, die aus dem genannten Material bestehen und nach Erreichen einer nicht mehr zulässigen Länge bzw. Wandungsdicke ausgetauscht werden können, um die Reproduzierbarkeit, Zuverlässigkeit und Festigkeit der Schweißpunkte zu gewährleisten.

Derartige Kappen sind häufig näpfchenartige Hohlteile, die über einen entsprechenden Konus auf einem Träger der Schweißzangen aufgesetzt werden und somit fest mit der Schweißzange, gleichzeitig aber lösbar verbunden sind. Das Wechseln der Kappen ist ein relativ aufwendiger Vorgang, der darüber hinaus mit einer Stillstandszeit der Schweißanlage einhergeht und daher nur dann vorgenommen werden soll, wenn die Kappe nicht mehr innerhalb des zulässigen Toleranzbereichs liegt. Zur Vermeidung dieser übermäßigen Stillstandszeit ist es aus der DE 10 2010 025 835 B3 bekannt, die Kappen (statt sie auszuwechseln) zunächst einer formgebenden Bearbeitung zu unterziehen, bei der die den Werkstücken nahen Bereiche der Kappe ähnlich wie bei einem Anspitzer eines Bleistiftes spanend nachbearbeitet werden und daher nach dieser Bearbeitung wieder die Toleranzen hinsichtlich der Form und der Oberfläche einhalten. Dieses Nachbearbeiten der Kappen erfolgt üblicherweise mit spanenden Werkzeugen, die durch eine Relativbewegung zwischen der Kappe und dem Werkzeug genau wie beim Anspitzer eines Bleistiftes die Oberfläche der Kappe definiert abtragen und dabei Verunreinigungen beseitigen sowie die Ausgangsgeometrie der Kappe in dem Bereich der Schweißpunkte wieder herstellen. Hierzu ist eine Vielzahl von Werkzeugen bekannt, die durch entsprechende Formgebung oder Zusammenwirken mehrerer entsprechender Werkzeuge die Geometrie der Schweißkappe wieder einstellen. Üblicherweise werden Werkzeuge eingesetzt, die als Schneidplatten mit oder ohne Radiusschneide ausgeführt sind.

Gegenüber dem Schweißen von Stahlmaterialien ergeben sich bei dem in der Automobiltechnik zunehmend benutzten Schweißen von Aluminiummaterialien unterschiedliche Anforderungen an das Nachbearbeiten von Schweißelektroden. Das Schweißen von Aluminiummaterialien lässt sich nur dann mit wirtschaftlichen Standzeiten der Schweißelektroden realisieren, wenn die Berührungsflächen der Elektroden für die Berührung der zu verschweißenden Aluminiummaterialien eine Profilierung aufweisen, siehe DE 10 2010 025 835 B3. Dort sind konzentrische kreisförmige Nuten und ein spanabhebendes Vielfachwerkzeug zur Nachbearbeitung dieser Nuten gezeigt.

Durch die beschriebene Profilierung der im Wesentlichen ebenen Berührungsflächen der Elektroden konnten die Standzeiten der Schweißelektroden deutlich verbessert werden. Für das wirtschaftliche Schweißen von Aluminiummaterialien, insbesondere in der Automobiltechnik, sind die Standzeiten aber immer noch zu niedrig.

Aufgabe der vorliegenden Erfindung ist die Schaffung von Schweißelektroden mit verbesserter Standzeit, insbesondere beim Widerstandspressschweißen von Aluminiumblechen.

Zur Lösung der Aufgabe weist eine erfindungsgemäße Schweißelektrode die Merkmale des Anspruchs 1 auf. Danach weist die Kontaktfläche zum Anpressen an die zu verschweißenden Werkstoffe eine oder mehrere Vertiefungen auf. Mindestens eine der Vertiefungen setzt sich auch im Bereich eines äußeren umlaufenden Randes der Kontaktfläche fort und unterbricht so den umlaufenden Rand. Die Vertiefung endet demnach nicht vor Erreichen des umlaufenden Randes der Kontaktfläche. Vielmehr können beim Schweißen entstehende Gase und geschmolzene Bestandteile entlang der Vertiefung den Bereich der Kontaktfläche nach außen verlassen. Versuche haben ergeben, dass sich durch diese besondere Ausgestaltung der Kontaktfläche die Standzeit der Schweißelektrode nochmals deutlich erhöht.

Die Kontaktfläche kann eben, leicht konvex oder leicht konkav ausgebildet sein. Vorzugsweise ist die Kontaktfläche im Wesentlichen eben, abgesehen von den vorgesehenen Vertiefungen. Letztere erstrecken sich insbesondere parallel zur Kontaktfläche bzw. sind relativ zur Kontaktfläche entlang ihrer Ausdehnung stets gleich tief. Vorzugsweise sind auch verschiedene Vertiefungen relativ zueinander gleich tief. Möglich sind aber auch Vertiefungen, die unter einem Winkel zur Kontaktfläche verlaufen, etwa Vertiefungen, die mit Abstand zum umlaufenden Rand beginnen und zum Rand hin tiefer werden.

Die Kontaktfläche kann durch Vertiefungen entsprechender Ausdehnung auch geteilt sein, so dass mehrere voneinander getrennte Teilkontaktflächen gebildet sind, zwischen denen jeweils Vertiefungen verlaufen.

Nach einem weiteren Gedanken der Erfindung kann, je nach Wirkflächendurchmesser, die im Wesentlichen ebene oder leicht konkave oder konvexe Kontaktfläche größer sein als die Summe der Fläche der Vertiefungen. Bei mehreren Teilkontaktflächen ist deren Summe zu bilden und jeweils ins Verhältnis zu setzen zur Summe der Flächen der Vertiefungen und die Parameter der programmierbaren Schweißung sind den Verhältnissen zwischen Kontaktflächen und Querschnittsflächen der Schweißelektrode anzupassen.

Vorteilhafterweise verläuft die zumindest eine Vertiefung linear, das heißt ohne Richtungsänderung. Natürlich können auch mehrere linear verlaufende Vertiefungen vorgesehen sein.

Vorteilhafterweise sind mehrere zueinander parallele Vertiefungen vorgesehen, welche insbesondere linear verlaufen. Lineare parallele Vertiefungen lassen sich mit einem entsprechenden Werkzeug einfach ausbilden und nachbearbeiten.

Nach einem weiteren Gedanken der Erfindung können mehrere Vertiefungen vorgesehen sein, welche jeweils unterschiedlich ausgerichtet sind. Vorzugsweise längliche Vertiefungen sind unter einem Winkel zueinander bzw. antiparallel angeordnet. Dadurch können beim Schweißen auftretende Gase und geschmolzene Bestandteile in mehrere Richtungen den Bereich der Kontaktfläche verlassen.

Nach einem weiteren Gedanken der Erfindung sind einander schneidende Vertiefungen vorgesehen, insbesondere mit mehreren Vertiefungen in einer Richtung und mehreren Vertiefungen in einer anderen Richtung. Vorzugsweise verlaufen die Vertiefungen innerhalb jeder Richtung parallel zueinander. Bei einer entsprechenden Anzahl von Vertiefungen ergibt sich ein Überkreuzungsmuster. Bevorzugt ist ferner eine Anordnung derart, dass die eine Richtung der Vertiefungen im rechten Winkel zur anderen Richtung verläuft.

In Fortbildung der Erfindung kann vorgesehen sein, dass sich eine oder mehrere Vertiefungen, vorzugsweise alle Vertiefungen-über-die gesamte Kontaktfläche erstrecken und so den äußeren umlaufenden Rand der Kontaktfläche an beiden Enden der jeweiligen Vertiefung unterbrechen. Dies erleichtert den Austritt von Gasen und Schmelzen in besonderer Weise.

Gemäß einer Fortbildung der Erfindung kann vorgesehen sein, dass eine oder mehrere Vertiefungen gekrümmt ausgebildet sind, insbesondere teilkreisförmig. Vorzugsweise verlaufen die Vertiefungen aber trotzdem parallel zur Kontaktfläche bzw. in der Ebene derselben. Teilkreisförmige und an ihren beiden Enden über den äußeren umlaufenden Rand der Kontaktfläche reichende Vertiefungen sind durch ein drehendes Werkzeug - eine drehende Scheibe mit aufgesetzten Schneidelementen - schnell und einfach bearbeitbar.

Gegenstand der Erfindung ist auch eine Schweißvorrichtung, insbesondere zum Aluminiumschweißen, mit Schweißelektroden gemäß der voranstehend beschriebenen Erfindung und deren Ausgestaltungen. Die Schweißvorrichtung kann auch eine Schweißzange sein.

Ebenfalls Gegenstand der Erfindung ist eine Vorrichtung zur Formgebung und/oder zur Bearbeitung von Schweißelektroden mit den voranstehend erörterten Merkmalen, gemäß dem Oberbegriff des Anspruchs 11. Bestandteil der Vorrichtung sind ein Träger, auf welchem mindestens ein Schneidelement vorgesehen ist, sowie ein Antrieb zur Bewegung des Trägers. Erfindungsgemäß ist der Träger zur Formgebung und/oder Bearbeitung der Schweißelektrode linear bewegbar. Durch die Linearbewegung wird das mechanische Entfernen von Ablagerungen auf der Schweißelektrode bzw. das Nacharbeiten der ursprünglichen Kontur der Kontaktfläche der Elektrode mit Vertiefungen durchgeführt.

Ebenfalls Gegenstand der vorliegenden Erfindung ist eine Vorrichtung zur Formgebung und/oder zur Bearbeitung von Schweißelektroden mit den zuvor erörterten Merkmalen, gemäß dem Oberbegriff des Anspruchs 12. Danach sind auf dem Träger mehrere Schneidelemente vorgesehen. Zugleich sind mehrere der Schneidelemente in einer Reihe hintereinander angeordnet und zur Formgebung und/oder Bearbeitung derselben Vertiefung in der Kontaktfläche der Schweißelektrode ausgerichtet. Eine Vertiefung wird somit durch mehrere Schneidelemente nacheinander bearbeitet.

Vorteilhafterweise sind mehrere Schneidelemente nebeneinander angeordnet zur Formgebung und/oder Bearbeitung mehrerer nebeneinander liegender Vertiefungen in der Kontaktfläche der Schweißelektrode. Möglich ist auch die Kombination von Schneidelementen derart, dass in einer Reihe mehrere Schneidelemente hintereinander angeordnet sind und zugleich mehrere nebeneinander.

Nach einem weiteren Gedanken der Erfindung weist die Vorrichtung einen Linearantrieb für den Träger auf. Das heißt, der Träger wird in einer Richtung parallel zur Kontaktfläche geführt. Dabei bearbeiten die Schneidelemente die Kontaktfläche bzw. die Vertiefungen in der Kontaktfläche. Bei der Rückwärtsbewegung des Trägers kann dieser entweder mit Abstand zur Kontaktfläche oder über diese geführt werden. Die Ausbildung und Anordnung der Schneidelemente ist an die Art der Bearbeitung (nur eine Bearbeitungsrichtung oder zwei Bearbeitungsrichtungen) angepasst. Je nach Anwendung kann die Kontaktfläche separat zu den Vertiefungen bearbeitet werden, auch in einer eigenen Bearbeitungsstation.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine perspektivische Ansicht einer Anwendung der erfindungsgemäßen Schweißelektroden zum Schweißen von zwei Aluminiumblechen,
- Fig. 2: eine perspektivische Ansicht analog Fig. 1, mit einer abgewandelten Kontaktfläche der Schweißelektrode,
- Fig. 3: eine perspektivische Ansicht analog Fig. 1, mit einer abgewandelten Kontaktfläche der Schweißelektrode,
- Fig. 4: eine perspektivische Darstellung eines Werkzeugs zur Bearbeitung der Kontaktfläche gemäß Fig. 3,
- Fig. 4a: eine Draufsicht auf das Werkzeug gemäß Fig. 4,
- Fig. 4b: eine Seitenansicht des Werkzeugs gemäß Fig. 4,
- Fig. 5: eine perspektivische Ansicht analog Fig. 1, mit einer abgewandelten Kontaktfläche der Schweißelektrode.

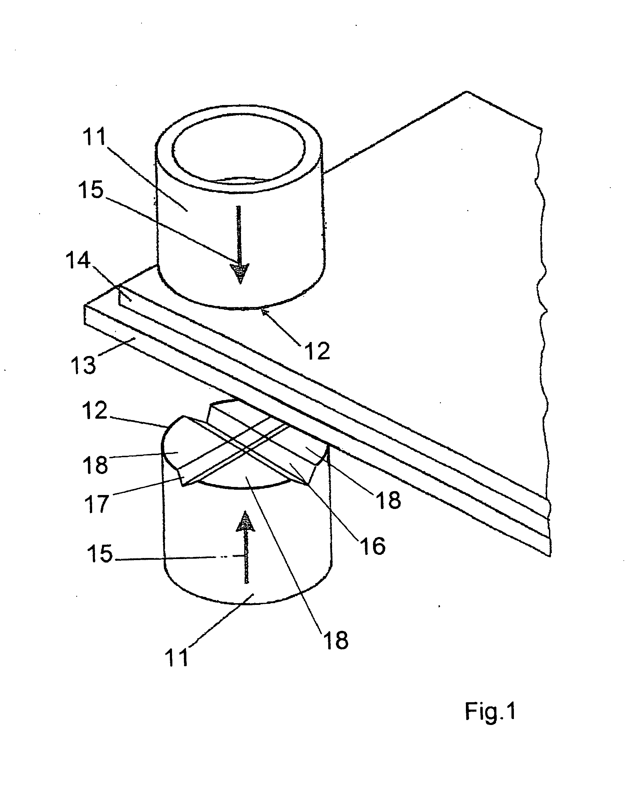

In Fig. 1 ist in einer schematischen Darstellung die Situation beim Punktschweißen von Aluminiummaterialien zu erkennen. Als austauschbare Kappen ausgestaltete und nur abstrahiert dargestellte Schweißelektroden 11 weisen jeweils eine Kontaktfläche mit umlaufendem Rand 12 auf. Der Rand 12 schließt die Kontaktfläche seitlich ab und steht hier nicht über.

Flach aufeinanderliegende Aluminiumbleche 13, 14 werden über eine nicht dargestellte Schweißzange im Bereich der Schweißelektroden 11 durch dieselben unter Druck in Richtung der Pfeile 15 aufeinandergedrückt. Dabei liegen die Schweißelektroden 11 zum Verschweißen im Wesentlichen flächig auf den Aluminiumblechen 13, 14 auf und übertragen damit den über die Schweißelektroden 11 zugeführten Schweißstrom in die Punktschweißstelle zwischen den Aluminiumblechen 13, 14. Anstelle von Aluminiumblechen können auch andere flache Werkstücke aus Aluminium oder Aluminiumlegierungen zum Verschweißen vorgesehen sein.

Zwischen den Schweißelektroden 11 und den Aluminiumflächen 13, 14 sollen sich immer gleiche Kontaktierungsbedingungen ergeben. Nur so kann eine Vielzahl von aufeinanderfolgenden Schweißungen mit gleichbleibender Qualität ausgeführt werden. Jedoch verändern sich die Schweißelektroden 11 im Bereich des mechanischen Kontaktes mit den Aluminiumblechen 13, 14 beim Schweißen. Es verbleiben bei der Verschweißung entstehende Schlacken an den Schweißelektroden 11. Zugleich können mechanische Veränderung der Berührungszone und metallurgische Änderungen der Schweißelektroden 11 auftreten. All dies kann dazu führen, dass aufeinanderfolgende Verschweißungen nicht mit gleichbleibender Qualität ausgeführt werden können.

Zur Verbesserung der Standzeiten der Schweißelektroden 11 und zur Aufrechterhaltung der Qualität aufeinanderfolgender Schweißvorgänge weisen die Schweißelektroden 11 im Bereich ihrer Kontaktflächen einander kreuzende, längliche Vertiefungen 16, 17 auf. Gemäß Fig. 1 sind genau zwei einander mittig unter einem Winkel von 90° kreuzende Vertiefungen 16, 17 vorgesehen. Diese unterbrechen an ihren Enden jeweils den umlaufenden Rand 12 und zerschneiden die jeweilige Kontaktfläche in vier Teilkontaktflächen 18. Die Vertiefungen 16, 17 weisen hier einen dreieckigen Querschnitt auf. Alternativ kann ein rechteckiger, trapezförmiger oder kreissegmentförmiger Querschnitt vorgesehen sein.

Die Anordnung der Vertiefungen 16, 17 hat zumindest zwei Wirkungen. Beim Anpressen der Schweißelektroden 11 an die Aluminiumbleche 13, 14 ergibt sich eine höhere Flächenpressung für die Teilkontaktflächen 18 als bei einer Kontaktfläche ohne Vertiefungen. Außerdem können während des Schweißvorgangs entstehende Gase und schmelzförmige Stoffe entlang der Vertiefungen aus dem Bereich der Kontaktfläche austreten. Dadurch verringert sich die Anlagerung von Schweißrückständen auf den Schweißelektroden. Entsprechend erhöhen sich die Standzeiten. Es können mehr Schweißungen mit gleichbleibender Qualität ausgeführt werden, bis eine Bearbeitung der Schweißelektroden erforderlich ist.

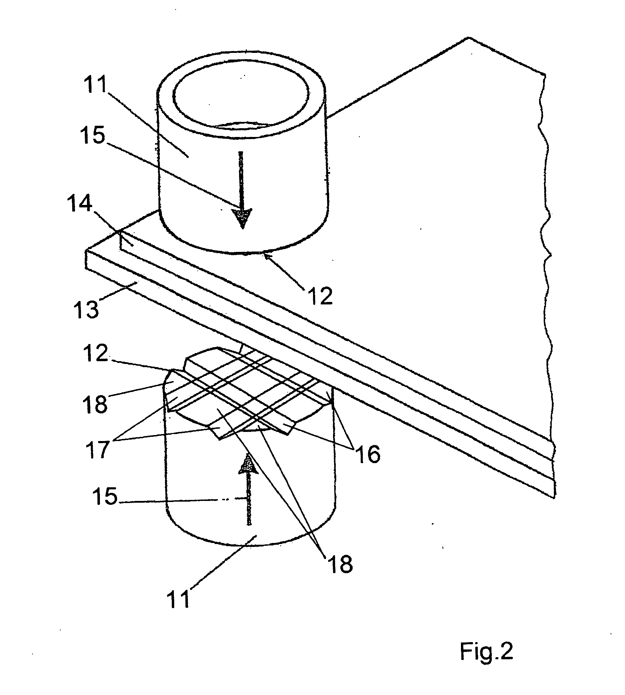

Im Unterschied zu Fig. 1 sind in Fig. 2 auf der Kontaktfläche der Schweißelektrode 11 in jeder Richtung zwei zueinander parallele Vertiefungen 16, 17 vorgesehen. Dadurch fallen die Teilkontaktflächen 18 etwas kleiner aus. Auch verändert sich das Verhältnis von Summe der Teilkontaktflächen zur Summe der Flächen über den Vertiefungen 16, 17 (oder zur Elektroden-Querschnittsfläche) und ist etwas kleiner in Fig. 1, jedenfalls dann, wenn die Vertiefungen in Fig. 2 genauso dimensioniert sind wie in Fig. 1.

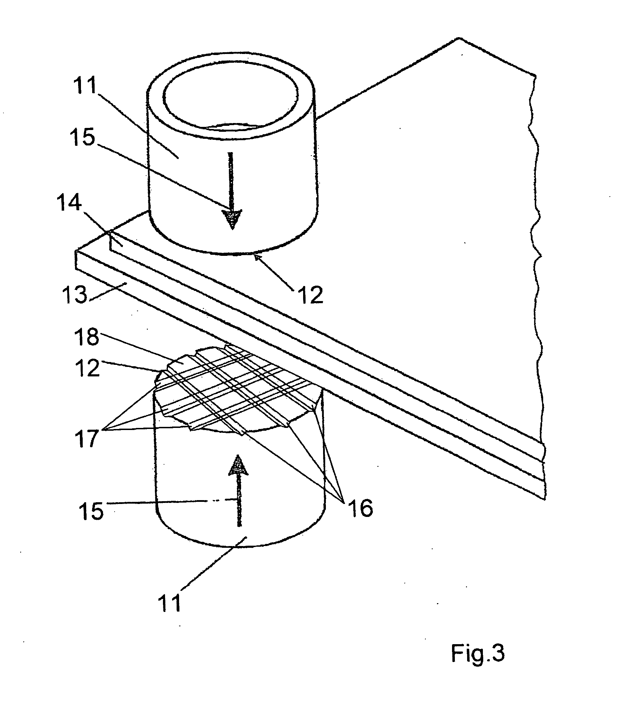

In analoger Weise sind gemäß Fig. 3 entlang der Kontaktfläche der Schweißelektrode 11 in jeder Richtung drei Vertiefungen 16, 17 angeordnet, mit noch kleineren Teilkontaktflächen 18, zur Bildung eines Überkreuzungsmusters. Vorzugsweise sind die Querschnitte der Vertiefungen 16, 17 kleiner, je mehr Vertiefungen entlang der Kontaktfläche vorgesehen sind.

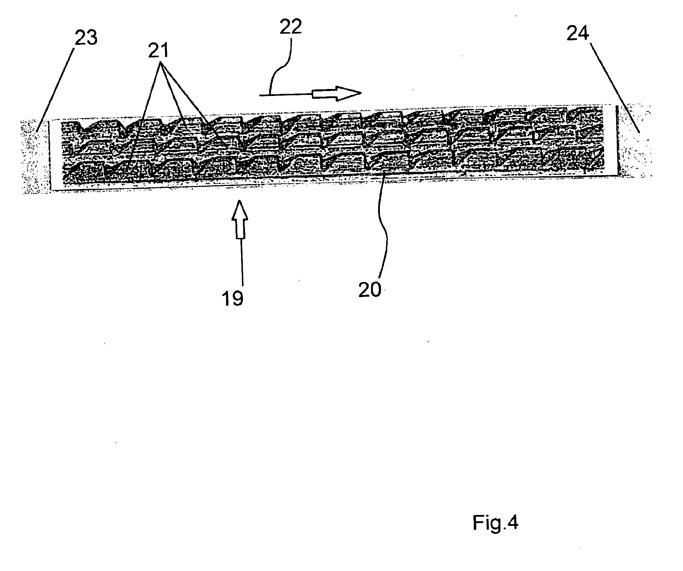

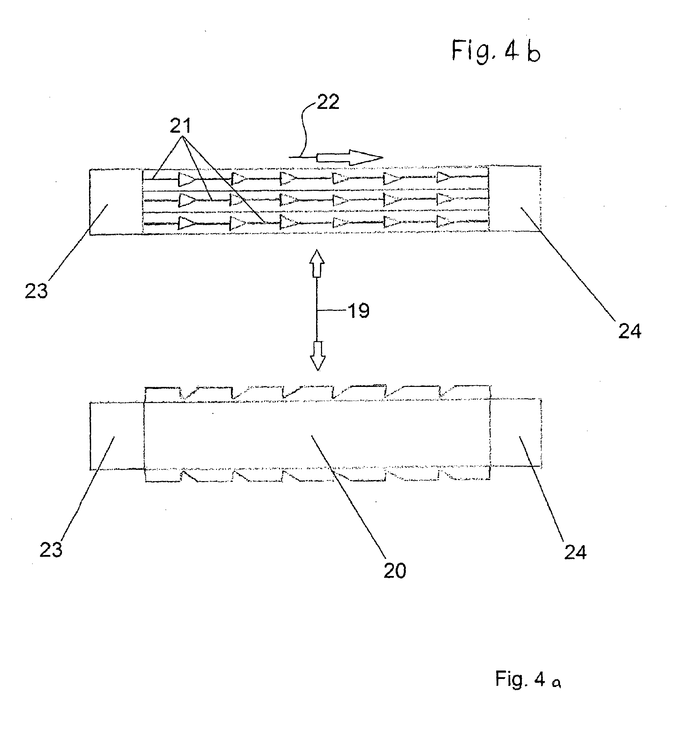

Fig. 4, 4a und 4b zeigen ein Werkzeug 19 für die Nachbearbeitung der Kontaktflächen und Vertiefungen 16, 17. Auf einem länglichen Träger 20 sind oberseitig und unterseitig jeweils drei parallel zueinander angeordnete Reihen mit Schneidelementen 21 vorgesehen. Zum Bearbeiten der Schweißelektroden wird das Werkzeug 19 in Längsrichtung, also in Richtung des Pfeils 22 bewegt und zurück in Gegenrichtung.

Die einzelnen Schneidelemente 21 sind barrenförmig ausgebildet und weisen jeweils einen im Wesentlichen dreieckigen Querschnitt (quer zum Pfeil 22) auf, entsprechend der Form der Vertiefungen 16, 17. Vorzugsweise sind die Schneidelemente 21 einer Reihe genau seitlich neben den Schneidelementen der benachbarten Reihe angeordnet, wie auch in Fig. 4 und 4b gezeigt. Alternativ können die Schneidelemente von Reihe zu Reihe in Richtung des Pfeils 22 versetzt angeordnet sein.

Der Träger 20 weist jeweils freie Enden 23, 24 auf mit vorzugsweise rechteckigem oder rundem Querschnitt und kann im Bereich dieser Enden eingespannt sein, gegebenenfalls auch nur einseitig. Das Werkzeug 19 ist in einer nicht gezeigten Bearbeitungsstation von einem nicht gezeigten Antrieb in Richtung des Pfeils 22 und wieder zurück linear bewegbar. Zum Bearbeiten der Schweißelektroden 11 werden (nicht gezeigten) Schweißzangen mit den Schweißelektroden 11 in die Bearbeitungsstation bewegt. Die Bearbeitung der (im Wesentlichen ebenen) Teilkontaktflächen erfolgt vorzugsweise separat, je nach Anwendung auch in einer eigenen-Bearbeitungsstation.

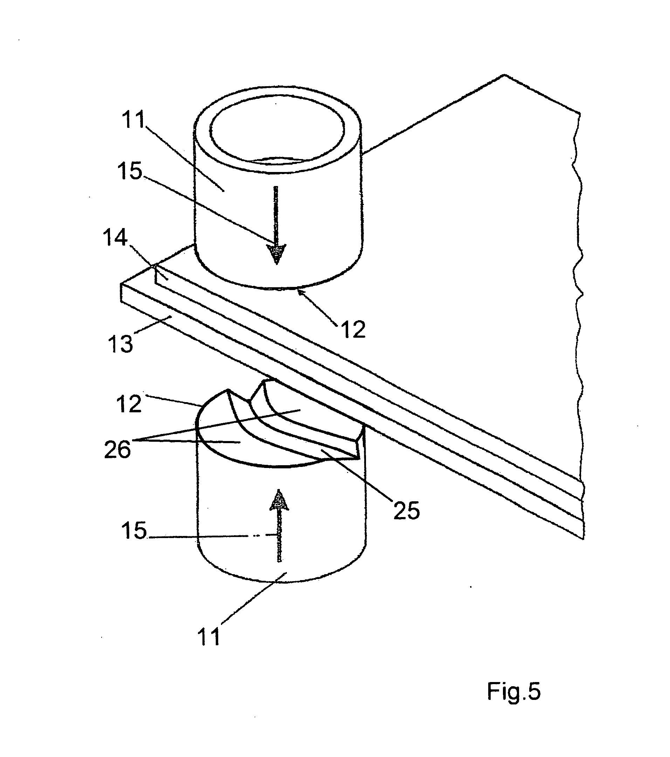

Fig. 5 zeigt eine Abwandlung in der Gestaltung der mit Vertiefungen versehenen Kontaktfläche. Gemäß Fig. 5 ist nur eine teilkreisförmige Vertiefung 25 vorgesehen mit dadurch gebildeten, unterschiedlichen Teilkontaktflächen 26. Die Vertiefung 25 kann beispielsweise durch ein rotierendes und an die Krümmung der Vertiefung 25 angepasstes Werkzeug mit Schneidelement bearbeitet werden. In weiterer Abwandlung können mehrere gekrümmte Vertiefungen vorgesehen sein, auch einander kreuzende gekrümmte Vertiefungen.

### Bezugszeichenliste:

- 11: Schweißelektroden
- 12: umlaufender Rand
- 13: Aluminiumblech
- 14: Aluminiumblech
- 15: Pfeile
- 16: Vertiefung
- 17: Vertiefung
- 18: Teilkontaktflächen
- 19: Werkzeug
- 20: Träger
- 21: Schneidelemente
- 22: Pfeil
- 23: Trägerende
- 24: Trägerende
- 25: Vertiefung
- 26: Teilkontaktflächen

## Patentansprüche

1. Schweißelektrode (11), insbesondere zum Aluminiumschweißen, mit einer Kontaktfläche zum Anpressen an zu verschweißende Werkstoffe, wobei die Kontaktfläche eine oder mehrere Vertiefungen (16, 17, 25) aufweist, **dadurch gekennzeichnet, dass** in der Kontaktfläche zumindest eine Vertiefung (16, 17, 25) vorgesehen ist, welche sich auch im Bereich eines äußeren umlaufenden Randes (12) der Kontaktfläche fortsetzt und so den umlaufenden Rand (12) unterbricht.

2. Schweißelektrode nach Anspruch 1, **dadurch gekennzeichnet, dass** die Kontaktfläche im Wesentlichen eben, leicht konvex oder leicht konkav ist, abgesehen von den Vertiefungen (16, 17, 25).

3. Schweißelektrode nach Anspruch 1 oder 2, **dadurch gekennzeichnet, dass** die im Wesentlichen ebene, leicht konvexe oder leicht konkave Kontaktfläche größer ist als die Summe der Flächen über den Vertiefungen (16, 17, 25).

4. Schweißelektrode nach Anspruch 1 oder einem der weiteren Ansprüche, **dadurch gekennzeichnet, dass** die zumindest eine Vertiefung (16, 17, 25) linear verläuft.

5. Schweißelektrode nach Anspruch 1 oder einem der weiteren Ansprüche, **dadurch gekennzeichnet, dass** mehrere zueinander parallele Vertiefungen (16, 17) vorgesehen sind, welche insbesondere linear verlaufen.

6. Schweißelektrode nach Anspruch 1 oder einem der weiteren Ansprüche, **dadurch gekennzeichnet, dass** mehrere Vertiefungen (16, 17, 25) vorgesehen sind, welche jeweils unterschiedlich ausgerichtet sind.

7. Schweißelektrode nach Anspruch 1 oder einem der weiteren Ansprüche, **dadurch gekennzeichnet, dass** einander schneidende Vertiefungen (16, 17) vorgesehen sind, insbesondere mit mehreren Vertiefungen (16) in einer Richtung und mehreren Vertiefungen (17) in einer anderen Richtung.

8. Schweißelektrode nach Anspruch 1 oder einem der weiteren Ansprüche, **dadurch gekennzeichnet, dass** sich eine oder mehrere Vertiefungen (16, 17, 25), vorzugsweise alle Vertiefungen, über die gesamte Kontaktfläche erstrecken und so den äußeren umlaufenden Rand (12) der Kontaktfläche an beiden Enden der jeweiligen Vertiefung unterbrechen.

9. Schweißelektrode nach Anspruch 1 oder einem der weiteren Ansprüche, **dadurch gekennzeichnet, dass** eine oder mehrere Vertiefungen (25) gekrümmt ausgebildet sind, insbesondere teilkreisförmig.

10. Schweißvorrichtung, insbesondere zum Schweißen von Aluminiumwerkstoffen, mit Schweißelektroden nach einem der voranstehenden Ansprüche.

11. Vorrichtung zur Formgebung und/oder zur Bearbeitung von Schweißelektroden nach einem der voranstehenden Ansprüche 1 bis 9, mit mindestens einem Schneidelement (21) auf einem Träger (20) und einem Antrieb zur Bewegung des Trägers, **dadurch gekennzeichnet, dass** der Träger (20) zur Formgebung und/oder Bearbeitung der Schweißelektrode (11) linear bewegbar ist.

12. Vorrichtung zur Formgebung und/oder zur Bearbeitung von Schweißelektroden (11) nach einem der voranstehenden Ansprüche 1 bis 9, mit mindestens einem Schneidelement (21) auf einem Träger (20), **dadurch gekennzeichnet, dass** mehrere Schneidelemente (21) in einer Reihe hintereinander angeordnet und zur Formgebung und/oder Bearbeitung derselben Vertiefung (16, 17) in einer Kontaktfläche der Schweißelektrode (11) ausgerichtet sind.

13. Vorrichtung nach Anspruch 11 oder 12, **dadurch gekennzeichnet, dass** mehrere Schneidelemente (21) nebeneinander angeordnet sind zur Formgebung und/oder Bearbeitung mehrerer nebeneinander liegender Vertiefungen (16, 17) in der Kontaktfläche der Schweißelektrode (11).

14. Vorrichtung nach Anspruch 12 oder 13, **gekennzeichnet durch** einen Linearantrieb für den Träger (20).
